# EUROPEAN PATENT SPECIFICATION

(11) **EP 2 860 956 B1**
(45) Date of publication and mention of the grant of the patent: **11.12.2019**
(21) Application number: 13004821.8
(22) Date of filing: 08.10.2013
(51) Int. Cl.: H04N 1/58, G06K 15/02

(54) **Method for converting print data into a raster image**
Verfahren zur Umwandlung von Druckdaten in ein Rasterbild
Procédé pour convertir des données d'impression dans une image tramée

(43) Date of publication of application: 15.04.2015
(73) Proprietor: Canon Kabushiki Kaisha, Tokyo 146-8501 (JP)
(72) Inventor: Brassé, Marco H.H., 5914 CA Venlo (NL); Akashi, Masamichi, 5914 CA Venlo (NL)
(74) Representative: Draaisma, Henricus Johannes George

(56) References cited:
- EP-A1- 1 191 784
- US-A1- 2007 177 173
- US-A1- 2008 204 774
- US-A1- 2010 079 818
- US-B1- 7 209 258

## Description

### BACKGROUND OF THE INVENTION

### 1. Field of the Invention

The invention relates to a method for converting print data comprising objects into a raster image. The invention further relates to a computer program product, including computer readable code embodied on a computer readable medium, said computer readable code comprising instructions for executing the steps of the presently invented method and to a print system, comprising a print controller and a print engine, wherein the print controller is configured to convert incoming print data to raster image data and the print engine is configured to apply the raster image data in marking a receiving material.

### 2. Description of the Related Art

Current print systems comprise a print controller for receiving print data for being printed and a print engine for marking a receiving material according to the print data. The print data are most of the times generated by a print driver in a software application on a client computer. In the past, the print data were specific for a specified print system, but the direction of development is to apply more print system independent print data. e.g. In accordance with a page description language (PDL) and a portable document format (PDF). In that case, the print data comprise objects, having object attributes such as object type, object size, object position, object color, font information etc. Which object attributes are applicable depends on the kind of object Involved. Assembling the objects that are positioned on a single document page, enables a print system to output a page accordingly. A great advantage of using objects is that the resolution and other characteristics of a print engine are not relevant at the time of generating the print data.

In fact, print data in this form are even not specific for printing, but can generally be used by software applications to exchange data among various applications or among various users of the same application. A print controller, also known as a digital front-end or a print server, Is then only one of the possible applications for using the print data. The print controller generally converts the print data that it receives, to a raster image having pixels for each individual page in a document, wherein a pixel is characterized by a value for each channel of the raster image. A value may refer to a colour channel, indicating an amount of colorant, or a colour density. Another value of a pixel may refer to a channel for pixel attributes, indicating a feature of the pixel, such as whether the pixel is part of a text object or whether the pixel is part of an image object. This pixel attribute may be used In further processing the raster image by the print engine. The print engine marks a receiving material In response to a print signal that is derived from the raster image after applying an appropriate image processing step. E.g., if the print engine only has two levels for a print pixel, a halftoning step is used to derive a bilevel print signal from a continuous tone raster image. If the print engine applies one colorant, such as black toner or ink, the raster image may only comprise one colour channel. If the print engine applies four colorants, four colour channels are used in a raster image, one colour channel for each colorant, such as in a CMYK print engine, applying cyan, magenta, yellow and black colorant.

However, print data get increasingly complex by the increasing capacity of new features in the software applications that make up the documents. A mechanism called transparency has been introduced to enhance the possibilities of presenting data in documents. Transparency refers to objects on a page, such as images, graphics, or text, which are transparent or "show through". It is typically used for shadow effects, to lighten (parts of) images so that the text on top remains readable, to make objects fade into another object or to create a tint of a certain colour. In the conversion of transparent objects to a raster image, the pixel attibute data are not always correct, since a single pixel in the raster image may be part of more than one object. Therefore, the printed output, depending on the pixel attribute data, may be affected by the transparency in an unpredictable way.

To make things worse, users are not always aware of the transparency of objects that are used in the design of a document. This results among others from copying and pasting transparent objects from different applications without addressing the issue or from using tooling which automatically defines object layers. This applies especially for text objects, overlapping other objects, involving transparency. The print quality of documents wherein these objects occur may therefore not be according to an expected standard. Text objects are usually rendered with sharp, straight edges, whereas for non-text objects other characteristics, such as colour stability and smoothness, are more important. Thus, a print engine may apply a different halftone algorithm in an image processing step for text and non-text objects or apply a different amount of filtering in the form of sharpening and/or blurring, If a text object partially overlaps a transparent, other object, a transition between two different image processing methods may become visible within the characters of the text object.

The handling of transparent objects has been dealt with before, especially in relation to the colour management of various objects. In US Patent 7,209,258, a method for transparency flattening is described wherein the transparency is handled by dividing a document page into a plurality of subregions. However, this does not solve all ambiguities that may arise of the transparent objects indicated above. In US Patent application 2007/0177173, a dedicated colour conversion for transparent objects is applied to obtain accurate colour output. In US Patent application 2008/0204774, a specific image processing attribute data, different from all other attribute data corresponding to object attributes, Is created to control the print output. However, no solution can be found that adequately addresses the issue of overlapping, transparent objects for obtaining a consistent print quality. EP1191784 discloses a method for differentially processing image types within a document image to enhance the quality of an image on a receiving medium. In one aspect, the method begins by receiving document image data including one or more image regions. The method determines for each image region whether the region includes any image data corresponding to a first image type. The method then prints regions including image data corresponding to the first image type according to a first pixel management process and prints regions not including image data corresponding to the first image type according to a second pixel management process.

Therefore, a problem exists in how to control a print quality in a print system handling documents with several objects on top of each other, some of which may be (partly) transparent. An object of the present invention is to provide a way to control this quality.

### SUMMARY OF THE INVENTION

According to the present invention, the above mentioned object is achieved by a method as defined in claim 1.

In general, the print quality of text objects is optimal by tagging them as text. Text in a raster image is characterised by sharp transitions between marked area and unmarked area. If a font size of a text object is large, there are situations wherein a better overall print quality is obtained if a text object Is printed by a print engine as non-text. In the present invention, it is found that these situations can be discriminated by the font size that is used by the text object. Small text should be processed as text to retain the sharp edges. By using the font size of the text object to switch between one or another raster image processing method, no transition within the text will occur, even if a text object only partly overlaps a transparent object.

The present invention is further embodied in a print system as defined in claim 6. The predetermined threshold Is set in dependence of the print quality of the individual text objects and objects that are processed as non-text objects. Additional features can be found in the claims appended to this description.

Further features and advantages of the invention will be set forth in the detailed description that follows, and In part will be obvious from the description, or may learned by the practice of the Invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter. However, it should be understood that the detailed description and specific examples, while indicating preferred embodiments of the Invention, are given by way of illustration only, since various changes and modifications within the scope of the Invention will become apparent to those skilled in the art from this detailed description.

### BRIEF DESCRIPTION OF THE DRAWINGS

Hereinafter the present invention is further elucidated with references to the appended drawings showing non-limitlng embodiments and wherein:
- Fig. 1: is a configuration of a print system with application terminals;
- Fig. 2: is an example of a text object overlapping another object;
- Fig. 3: is a conversion method according to the prior art;
- Fig. 4: is a method of labelling pixels in a text object according to the present invention; and
- Fig. 5: is another method of of labelling pixels in a text object according to the present invention.

### DETAILED DESCRIPTION OF EMBODIMENTS

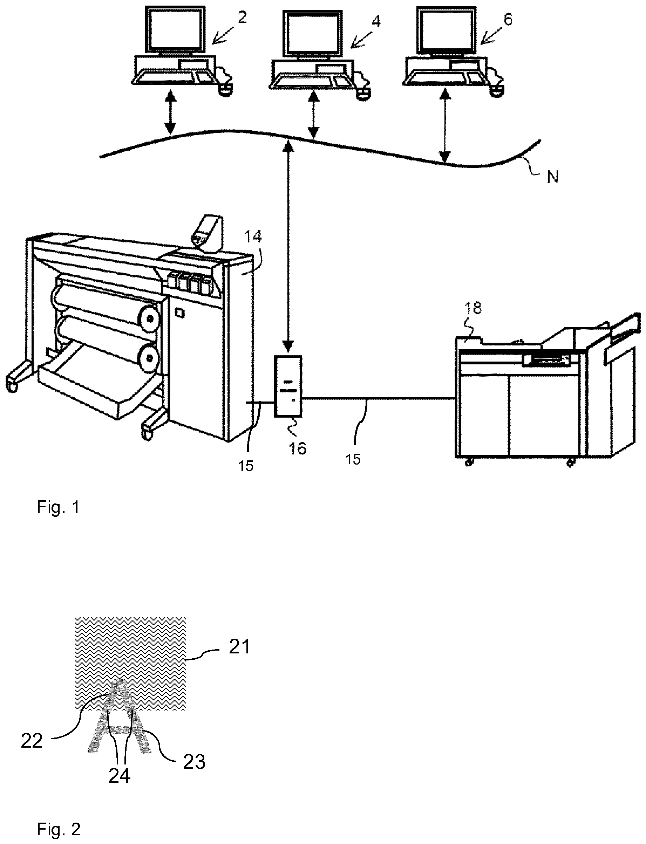

The print system in Fig. 1 comprises a number of workstations 2,4,6, or application terminals, that are connected to a print controller computer 16 through a network N. On the workstations, print jobs are prepared Involving documents in various formats and various sizes. The data in these documents originate from different sources, such as scanners, digital camera's and computer applications. The print jobs, comprising print data of documents to be printed, are sent to the print controller computer where the jobs are analyzed and the documents converted into raster image data that are appropriate to be accepted by one of the print engines 14, 18 connected to the print controller 16. In the present embodiment, a print engine 14 for large size documents, such as CAD drawings and banners, is available and a print engine 18 for office size documents, such as A4 and A3 sized support sheets of paper, connected to the controller computer by a means for data transfer 15. In the process of converting, the documents are rasterlzed and rendered for the marking process of the printer to be used. In this process, in addition to colour management for the colorants of the specified print engine, also a number of image processing methods may be applied to improve the appearance of the image on the support material that is used in the printer. The image data are compressed before being sent to the printer and possibly saved on a non-volatile memory in the controller, such as a hard disk. The print engine and the print controller communicate in such a way that parameters, such as a font size threshold and colorant thresholds, may be set by a user on a user interface of the print engine or a user interface of the print controller. The user interface of the print controller is often embodied as a webpage.

Fig. 2 shows an example of two overlapping objects, The first object 21 is a transparent graphics object and the second object is a text object in the form of a character A. The text object comprises a part 22 that overlaps the first object and a part 23 that does not overlap. In a print engine that discriminates text and non-text pixels, e.g. by using a different halftone screen, a transition between those differently processed parts may become visible within the character on the boundary of the transparent object 21. In Fig. 2, a position 24 of this transition between the part 22 and the part 23 is indicated.

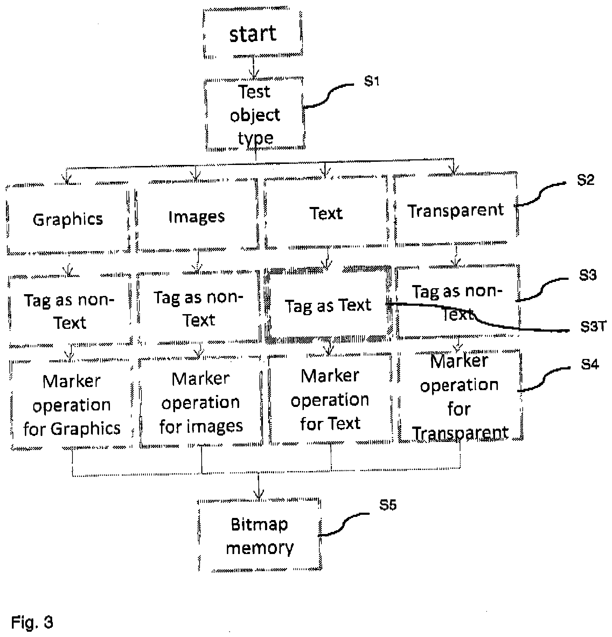

Fig. 3 shows the processing steps for a familiar conversion of objects in print data. The print data of a document as received by the print controller comprise several objects on a page of the document. For each page In the print data a raster image is generated using the objects that relate to a particular page. For each object, the steps S1 to S5 are carried out in order to convert the object to raster image data that are stored in a bitmap memory In step S5. Starting by testing the object type in step S1, one of the vertical processing paths is followed, depending whether the object type is graphics, image, text or transparent, as determined in step S2. The object is labeled with an object tag in step S3, the object tag having one of two possible values, text and non-text. A marker operation in step S4 determines the colorant values for the pixels in the raster image as defined by the object. Also, a pixel attribute, having either a first or a second value, is determined for each pixel in accordance with the object tag from step S3. Depending on the processing order of the objects and the way transparency is handled in the conversion process, a pixel attribute, or tag bit, of an overlapping text object and a non-text object may have either the value text or non-text. Note that once a tag bit of a pixel is set, it is not changed anymore. This ambiguity may show in a print process that depends on this tag bit, such as a print process wherein a halftone screen is applied in dependence of the value of the tag bit. In a print engine, a fine halftone screen is usually applied for sets of pixels labeled as text in order to have straight edges, whereas a less fine halftone screen is applied for sets of pixels that are labeled as non-text In order to enhance the colour stability. Both issues, straight edges and colour stability, are of importance for the overall print quality. Using the method of the prior art, as in Fig. 3, it is impossible to determine if a pixel on a position where a text object is placed upon an image object, should be labeled as text or non-text. In a present embodiment, the step S3T is modified In order to remit this indistinctness,

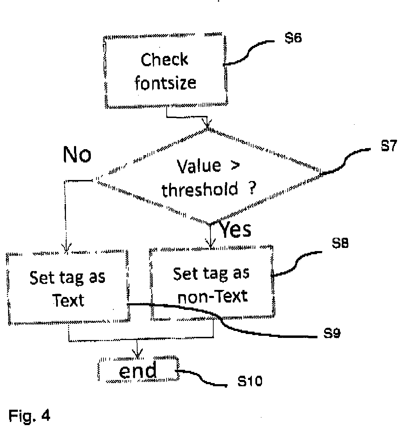

Fig. 4 shows the steps that replace step S3T in Fig. 3. These steps are independent of the number of colour channels involved. Since the object type is text, the objects has an object attribute font size. The font size of the text object Is checked In step S6. The value of this object attribute is compared with a predetermined threshold in step S7. If it is higher (Yes), the object tag Is set to the value non-text in step S8, but if not (No), the object tag is set to the value text in step S9. Ending these extra steps in S10 means that the conversion proceeds to step S4 in Fig. 3. A characteristic range for the value of the predetermined threshold is a font size of 10 to 14.

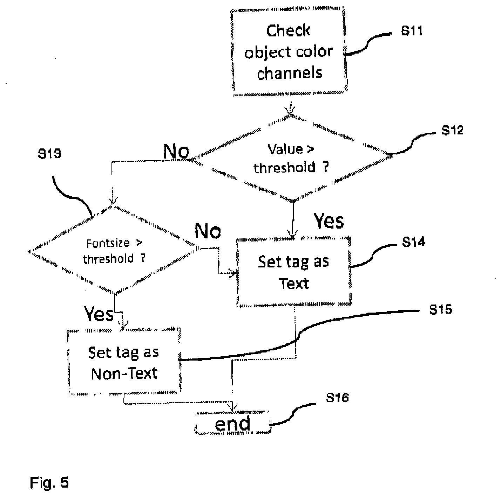

In another embodiment, the step S3T in Fig. 3 is replaced by the steps depicted in Fig. 5. In this embodiment, the value of the object colour channels is checked first In step S11. The present embodiment comprises a C, M, Y, and K channel, but also a different number of colour channels may be used, The value in the colorant channels is comapred with a colorant threshold set for each of the colour channels in step S12. In an embodiment, these thresholds are different for each colour channel. If, for one of the colour channels, the value Is higher than zero, but not higher than a colorant threshold (No in step S12), the process proceeds to step S13, where a font size of the text object is compared to an associated threshold. If In step S12, for all colour channels, the value is higher than the threshold or zero (Yes), the comparison of the font size is not needed anymore, since the pixels associated with the object will be labeled with a pixel attribute text, since the print quality of a text object with a high colorant density does not show a dependence on a transparent object underneath the text, If the colorant density is lower than a colorant threshold (No in step S12) and the font size is not larger than the threshold (No in step S13), the text object receives the object tag text in step S14, which will be transferred to all pixels of the text object. If the colorant density is lower than a colorant threshold (No in step S12) and the font size is larger than the threshold (Yes in step S13), the text object receives the tag non-text in step S15. In pseudo-code the decision may be written as

```
 constraintCMYK :=
       (0 < C < threshold_C) OR
       (0 < M < threshold_M) OR
       (0 < Y < threshold_Y) OR
       (0 < K < threshold_K);
 IF ((font size [text object] >= threshold_font size) AND (constraintCMYK = TRUE)) THEN
       object tag := non-text
 ELSE
       object tag := text;
```

The step S16 indicates that the extra processing steps end and control is returned to the marker operation in step S4 in Fig. 3. A characteristic range for the value of the colorant threshold is a coverage of 70 to 90 %.

The above disclosure is intended as merely exemplary, and not to limit the scope of the invention, which is to be determined by reference to the following claims.

## Claims

1. A method for converting print data, comprising objects with object attributes, to raster image data, having pixels with a colorant value and a pixel attribute for controlling a raster image processing step, which is applied in deriving a print signal from the raster image data, wherein a value of a pixel attribute of a pixel within an object Is selected in dependence on a value of an object attribute of said object, **characterised in that** a first value of a pixel attribute is selected for any pixel within an object having an object attribute with a value text object and an object attribute font size with a value higher than a predetermined threshold and a second value, different from the first value, of a pixel attribute is selected for any pixel within an object having an object attribute with a value text object and an object attribute font size with a value lower than said predetermined threshold.

2. The method according to claim 1, wherein a pixel in the raster image comprises only one pixel attribute with two possible values.

3. The method according to claim 1, wherein the first value Is only selected for a pixel within an object having an object attribute with a value text object and an object attribute font size with a value higher than a predetermined threshold, if a colorant value of the pixel is higher than zero and lower than a predetermined colorant threshold.

4. The method according to claim 3, wherein the predetermined colorant threshold depends on a colour channel.

5. A computer program product, including computer readable code embodied on a computer readable medium, said computer readable code comprising instructions for executing the steps of the method of claim 1.

6. A print system, comprising a print controller and a print engine, wherein the print controller is configured to convert incoming print data, comprising objects with object attributes, to raster image data, having pixels with a colorant value and a pixel attribute for controlling a raster image processing step, which is applied in deriving a print signal from the raster image data, wherein a value of a pixel attribute of a pixel within an object is selected in dependence of a value of an object attribute of said object, the print controller sending the raster image data to the print engine that is configured to receive the raster image data, convert the raster image data to print signals using values of pixel attributes and mark a receiving material with a colorant in accordance with the print signals, **characterised in that**
a value of a pixel attribute for a pixel within an object having an object attribute with a value text object and an object attribute font size with a value higher than a predetermined threshold is different from a value of said pixel attribute for a pixel within an object having an object attribute with a value text object and an object attribute font size with a value lower than said predetermined threshold and the conversion of the raster image data into print signals depends on the value of said pixel attribute.

7. The print system according to claim 6, wherein the raster image processing step comprises an application of a halftone screen with a screen frequency that depends on a value of a pixel attribute.

8. A print system according to claim 6, wherein a user interface is configured for adjusting the predetermined threshold according to a preference of a user of the print system.

## Patentansprüche

1. Ein Verfahren zur Umwandlung von Druckdaten, die Objekte mit Objektattributen enthalten, in Rasterbilddaten, die Pixel mit einem Farbwert und einem Pixelattribut haben, zur Steuerung eines Rasterbildverarbeitungsschrittes, der angewandt wird bei der Herleitung eines Drucksignals aus den Rasterbilddaten, wobei ein Wert eines Pixelattributs eines Pixels innerhalb eines Objekts in Abhängigkeit von einem Wert eines Objektattributs des Objekts ausgewählt wird, **dadurch gekennzeichnet, dass** ein erster Wert eines Pixelattributs ausgewählt wird für irgendein Pixel innerhalb eines Objekts, das ein Objektattribut mit einem Wert Textobjekt und ein Objektattribut Schriftgröße mit einem Wert größer als ein vorbestimmter Schwellenwert hat, und ein zweiter Wert eines Pixelattributs, der von dem ersten Wert verschieden ist, ausgewählt wird für irgendein Pixel innerhalb eines Objekts, das ein Objektattribut mit einem Wert Textobjekt und ein Objektattribut Schriftgröße mit einem Wert kleiner als der vorbestimmte Schwellenwert hat.

2. Das Verfahren nach Anspruch 1, bei dem ein Pixel in dem Rasterbild nur ein Pixelattribut mit zwei möglichen Werten aufweist.

3. Das Verfahren nach Anspruch 1, bei dem der erste Wert für ein Pixel innerhalb eines Objekts, das ein Objektattribut mit einem Wert Textobjekt und ein Objektattribut Schriftgröße mit einem Wert größer als ein vorbestimmter Schwellenwert hat, nur dann ausgewählt wird, wenn ein Farbwert des Pixels größer ist als null und kleiner als eine vorbestimmte Farbwertschwelle.

4. Das Verfahren nach Anspruch 3, bei dem die vorbestimmte Farbwertschwelle von einem Farbkanal abhängig ist.

5. Computerprogrammprodukt, mit von einem Computer lesbarem Code auf einem von einem Computer lesbaren Medium, wobei der von dem Computer lesbare Code Instruktionen für die Ausführung der Schritte des Verfahrens nach Anspruch 1 enthält.

6. Drucksystem mit einer Druckersteuerung und einem Druckgerät, bei dem die Druckersteuerung dazu konfiguriert ist, eintreffende Druckdaten, die Objekte mit Objektattributen enthalten, in Rasterbilddaten umzuwandeln, die Pixel mit einem Farbwert und einem Pixelattribut haben, zur Steuerung eines Rasterbildverarbeitungsschrittes, der angewandt wird bei der Herleitung eines Drucksignals aus den Rasterbilddaten, wobei ein Wert eines Pixelattributs eines Pixels innerhalb eines Objekts in Abhängigkeit von einem Wert eines Objektattributs des Objekts ausgewählt wird, wobei die Druckersteuerung die Rasterbilddaten an das Druckgerät sendet, das dazu konfiguriert ist, die Rasterbilddaten zu empfangen, die Rasterbilddaten in Drucksignale umzuwandeln unter Verwendung von Pixelattributen, und ein Empfangsmaterial in Übereinstimmung mit den Drucksignalen mit einem Färbemittel zu markieren, **dadurch gekennzeichnet, dass** ein Wert eines Pixelattributs für ein Pixel innerhalb eines Objekts, das ein Objektattribut mit einem Wert Textobjekt und ein Objektattribut Schriftgröße mit einem Wert größer als ein vorbestimmter Schwellenwert hat, von einem Wert dieses Pixelattributs für ein Pixel innerhalb eines Objekts, das ein Objektattribut mit einem Wert Textobjekt und ein Objektattribut Schriftgröße mit einem Wert kleiner als der vorbestimmte Schwellenwert hat, verschieden ist, und die Umwandlung der Rasterbilddaten in Drucksignale von dem Wert dieses Pixelattributs abhängig ist.

7. Drucksystem nach Anspruch 6, bei dem der Rasterbildverarbeitungsschritt die Anwendung einer Halbtonmaske mit einer Maskenfrequenz einschließt, die von einem Wert eines Pixelattributs abhängig ist.

8. Drucksystem nach Anspruch 6, bei dem eine Benutzerschnittstelle dazu konfiguriert ist, den vorbestimmten Schwellenwert gemäß einer Präferenz eines Nutzers des Drucksystems einzustellen.

## Revendications

1. Procédé de conversion de données d'impression, comprenant des objets avec des attributs d'objet, en données d'image matricielle, présentant des pixels avec une valeur de colorant et un attribut de pixel destiné à commander une étape de traitement d'image matricielle, qui est appliquée dans la déduction d'un signal d'impression provenant des données d'image matricielle, dans lequel une valeur d'un attribut de pixel d'un pixel dans un objet est sélectionnée en fonction d'une valeur d'un attribut d'objet dudit objet, **caractérisé en ce qu'**une première valeur d'un attribut de pixel est sélectionnée pour n'importe quel pixel dans un objet présentant un attribut d'objet avec un objet texte de valeur et une taille de police de caractères d'attribut d'objet avec une valeur supérieure à un seuil prédéterminé et une deuxième valeur, différente de la première valeur, d'un attribut de pixel est sélectionnée pour n'importe quel pixel dans un objet présentant un attribut d'objet avec un objet texte de valeur et une taille de police de caractères d'attribut d'objet avec une valeur inférieure audit seuil prédéterminé.

2. Procédé selon la revendication 1, dans lequel un pixel dans l'image matricielle comprend un seul attribut de pixel avec deux valeurs possibles.

3. Procédé selon la revendication 1, dans lequel la première valeur est sélectionnée uniquement pour un pixel dans un objet présentant un attribut d'objet avec un objet texte de valeur et une taille de police de caractères d'attribut d'objet avec une valeur supérieure à un seuil prédéterminé, si une valeur de colorant du pixel est supérieure à zéro et inférieure à un seuil de colorant prédéterminé.

4. Procédé selon la revendication 3, dans lequel le seuil de colorant prédéterminé dépend d'un canal de couleur.

5. Produit programme d'ordinateur, incluant un code lisible par ordinateur intégré sur un support lisible par ordinateur, ledit code lisible par ordinateur comprenant des instructions pour l'exécution des étapes du procédé de la revendication 1.

6. Système d'impression, comprenant un dispositif de commande d'impression et un moteur d'impression, dans lequel le dispositif de commande d'impression est configuré pour convertir des données d'impression entrantes, comprenant des objets avec des attributs d'objet, en données d'image matricielle, présentant des pixels avec une valeur de colorant et un attribut de pixel pour commander une étape de traitement d'image matricielle, qui est appliquée dans la déduction d'un signal d'impression à partir des données d'image matricielle, dans lequel une valeur d'un attribut de pixel d'un pixel dans un objet est sélectionnée en fonction d'une valeur d'un attribut d'objet dudit objet, le dispositif de commande d'impression envoyant les données d'image matricielle au moteur d'impression qui est configuré pour recevoir les données d'image matricielle, convertir les données d'image matricielle en signaux d'impression au moyen de valeurs d'attributs de pixel et marquer un matériau de réception avec un colorant conformément aux signaux d'impression, **caractérisé en ce que**
une valeur d'un attribut de pixel pour un pixel dans un objet présentant un attribut d'objet avec un objet texte de valeur et une taille de police de caractères d'attribut d'objet avec une valeur supérieure à un seuil prédéterminé est différente d'une valeur dudit attribut de pixel pour un pixel dans un objet présentant un attribut d'objet avec un objet texte de valeur et une taille de police de caractères d'attribut d'objet avec une valeur inférieure audit seuil prédéterminé et la conversion des données d'image matricielle en signaux d'impression dépend de la valeur dudit attribut de pixel.

7. Système d'impression selon la revendication 6, dans lequel l'étape de traitement d'image matricielle comprend une application d'une trame de similigravure avec une fréquence de trame qui dépend d'une valeur d'un attribut de pixel.

8. Système d'impression selon la revendication 6, dans lequel une interface utilisateur est configurée pour régler le seuil prédéterminé en fonction d'une préférence d'un utilisateur du système d'impression.
